# EUROPÄISCHE PATENTANMELDUNG

(11) **EP 0 610 767 A2**
(43) Veröffentlichungstag der Anmeldung: **17.08.1994**
(21) Anmeldenummer: 94101377.3
(22) Anmeldetag: 31.01.1994
(51) Int. Cl.: H02K 17/30, H02K 11/00, H02K 7/20, H02K 1/27, H02K 5/12

(54) **Elektromotor, insbesondere ein umrichtergespeister Asynchronmotor zum Antrieb von Kraftfahrzeugen**

(30) Priorität: 06.02.1993 DE 4303480
(71) Anmelder: Licentia Patent-Verwaltungs-GmbH, D-60596 Frankfurt (DE)
(72) Erfinder: Altmann, Manfred, Dipl.-Ing., D-26133 Oldenburg (DE); Oltmanns, Karl-Heinz, Dipl.-Ing., D-26123 Oldenburg (DE); Tillner, Siegfried, Dipl.-Ing., D-26125 Oldenburg (DE); Witthohn, Lutz, Dipl.-Ing., D-26135 Oldenburg (DE)
(74) Vertreter: Vogl, Leo, Dipl.-Ing.

(57) **Zusammenfassung**

Erfindungsgemäß wird ein kompakter und stets sicher schaltender Elektromotor, insbesondere ein umrichtergespeister Asynchronmotor zum Antrieb von Kraftfahrzeugen dadurch geschaffen, daß eine aus einer Magnetfeldsensorensteuerung und einem auf der Motorwelle (11) befestigten Polrad (31) aufweisende Überwachungsanordnung dadurch geschaffen, daß das Polrad (41) zwischen den über die Stirnfläche (45) des Statorblechpaketes (47) hinausragenden Wickelköpfen (19, 20) der Statorwicklungen drehbar angeordnet ist und einen auf seiner dem Lagerschild (7) zugewandten Stirnfläche (40) einen vielpolig magnetisierten Dauermagnetring (43) aufweist, dessen Pole (49) durch mehrere, konzentrisch zu der Motorwelle (11) und innerhalb des Motorgehäuses (3) angeordnete Magnetfeldsensoren (33) abtastbar sind.

## Beschreibung

Die Erfindung betrifft einen Elektromotor, insbesondere einen umrichtergespeisten Asynchronmotor zum Antrieb von Kraftfahrzeugen.

Durch die DE-A1 31 01 511 ist eine Motorüberwachungsanordnung für einen über ein Logik-Teil frequenzgeführten, umrichtergespeisten Asynchronmotor mit Kurzschlußläufer bekannt, bei der zur Belastungserkennung oder Belastungsüberwachung z. B. eines Waschmaschinenantriebes mit einem über einen Mikrocomputer gesteuerten Asynchronmotor als Drehzahl proportionales Signal die jeweilige Phasendifferenz zwischen Betriebsspannungsnulldurchgang und Betriebsstromnulldurchgang gegeben wird. Danach wählt das LogikTeil durch Vergleich mit einer gespeicherten Referenzgröße ein dem jeweiligen Belastungszustand angepaßtes Arbeitsprogramm aus und steuert den Antrieb des Waschautomaten entsprechend an.

Auch sind bereits Asynchronmotoren mit gekuppelten Drehzahlgebern bekannt, bei denen die mittels eines an die Läuferwelle des Drehstrommotors angeflanschten Drehzahlgebers ermittelten Drehzahlwerte in dem zur Steuerung des Umrichters erforderlichen und ans ich bereits vorhandenen Logik-Teil mit dort vorgebbaren, bestimmten Kontrollfunktionen zugeordneten Drehzahl-Referenzwerten verglichen und bei Koinzidenz mit den jeweiligen Referenzwerten die entsprechenden Schutz- bzw. Kontrollfunktionen angezeigt bzw. ausgelöst werden.

Weiterhin ist durch die DE-C2 37 17 180 ein Elektromotor mit einem außerhalb des Motorgehäuses am Lagerschild angeordneten Tachogenerator bekannt, dessen Rotor als auf der verlängerten Motorwelle angeordneter, mit dieser umlaufender, ringförmiger Permanentmagnet ausgebildet ist. Dieser Permanentmagnet beaufschlagt eine ihn umgebende Spule. Auch ist durch die DE-AS 21 46 893 bereits ein kollektorloser Gleichstrommotor mit einer durch Hallgeneratoren gesteuerten und aus Halbleiterschaltelementen aufgebauten Kommutierungseinrichtung bekannt, wobei die Trägerscheibe für die Hallgeneratoren an dem Motorgehäuse befestigt ist.

Die oben angeführten Überwachungsanordnungen für die Elektromotore haben den Nachteil, daß die Elektromotore eine große Baulänge aufweisen und für hohe Umgebungstemperaturen weniger geeignet sind.

Der Erfindung liegt nun die Aufgabe zugrunde, einen Elektromotor, insbesondere einen umrichtergespeisten Asynchronmotor zum Antrieb von Kraftfahrzeugen mit einer aus einer Magnetfeldsensorensteuerung und einem auf der Motorwelle befestigten Polrad bestehenden Überwachungsanordnung so auszubilden, daß die Kontroll- und Steuerfunktionen wie Drehrichtungserkennung, Kontrolle auf Einhaltung der vorgegebenen Drehzahl, Blockierschutz, Überlastungsschutz, Stillstandssetzung usw. des Elektromotors stets sicher angezeigt bzw. ausgeführt werden. Diese Aufgabe wird durch die im Patentanspruch 1 gekennzeichneten Merkmale gelöst.

Durch die Integration der Magnetfeldsensorensteuerung in das Motorgehäuse wird eine Verkürzung der Baulänge des Elektromotors erzielt, was bei dessem Einsatz in Kraftfahrzeugen sehr von Bedeutung ist. Weiterhin wird gemäß der Weiterbildung des Erfindungsgegenstandes nach Patentanspruch 2 verhindert, daß sich die magnetischen Streufelder von den Wickelköpfen der Ständerwicklungen und vom Rotor nicht mehr störend auf die Magnetfeldsensoren und damit auf die Steuerung des Umrichters auswirken können. Erfindungsgemäß werden die Steuer- und Kontrollfunktionen des Elektromotors sicher ausgeführt.

Durch die bevorzugte Ausbildung des Erfindungsgegenstandes nach Patentanspruch 17 ist eine einfache Justierung des Luftspaltes zwischen den Polen des Dauermagnetringes und der Magnetfeldsensoren auf der Leiterplatte schnell und einfach möglich. Auch ist ein einfacher Austausch der Leiterplatte bzw. der Magnetfeldsensoren möglich. Weiterhin ist der Erfindungsgegenstand durch die wirksame Wasserkühlung des Motorgehäuses auch bei hohen Umgebungstemperaturen sicher einsetzbar.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: einen Längsschnitt durch einen geschlossenen Asynchronmotor,

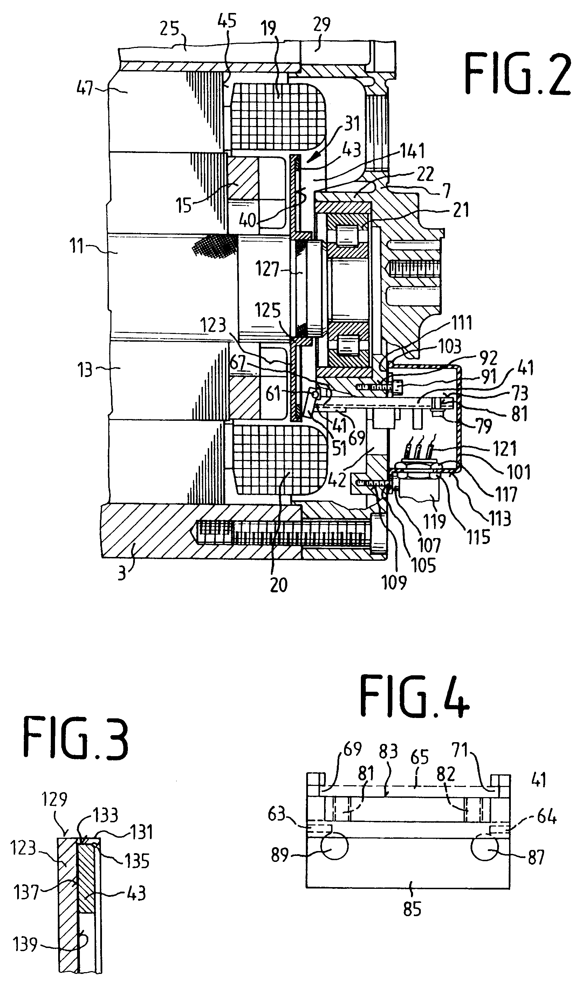

- Figur 2: eine Einzelheit aus Figur 1 mit der Überwachungsanordnung,
- Figur 3: eine Einzelheit aus Figur 2,
- Figur 4: eine Frontansicht auf die Leiterplattenhalterung,

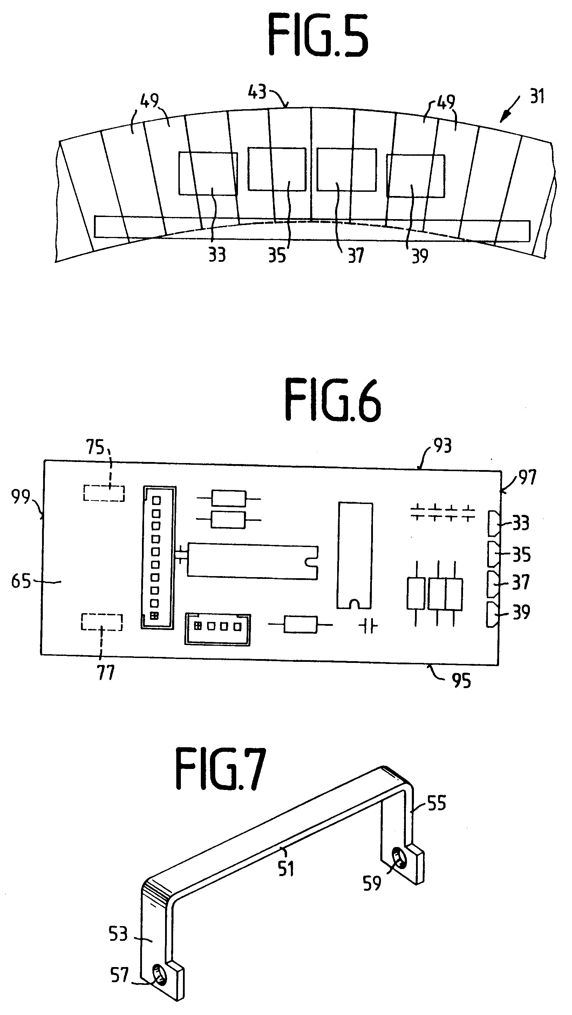

- Figur 5: eine Draufsicht auf einen Teil des Dauermagnetringes,
- Figur 6: eine Draufsicht auf die Leiterplatte und
- Figur 7: eine schaubildliche Darstellung des Abschirmblechteiles.

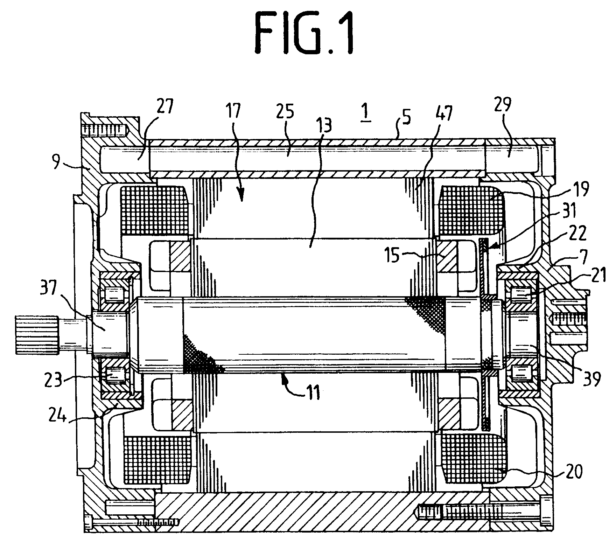

Die Figur 1 zeigt einen Elektromotor mit einem geschlossenen Gehäuse, insbesonderen einen umrichtergespeisten Asynchronmotor zum Antrieb eines Kraftfahrzeuges. Das Motorgehäuse 3 besteht aus einem zylindrischen Gehäusemantel 5, dessen beide offenen Stirnseiten einerseits durch ein erstes Lagerschild 7 und andererseits durch ein zweites Lagerschild 9 abgedichtet sind. Dieses Motorgehäuse 3 enthält einen Motor mit einer Rotorwelle 11 , einem Rotor 13, Kurzschlußringen 15, einem Stator 17 und mit Statorwickelköpfen 19, 20. Die Rotorwelle 11 ist mittels Wälzlager 21, 23 in Naben 22, 24 der Lagerschilde 7, 9 drehbar gelagert. Weiterhin weist der aus Metall bestehende zylindrische Gehäusemantel 5 in Umfangsrichtung gleichmäßig verteilt und achsensymmetrisch zum Rotor 13 bzw. Stator 17 angeordnete Längskanäle 25 auf, welche über Verbindungskanäle 27, 29 in den Lagerschilden 7, 9 derart flüssigkeitsleitend miteinander in Verbindung stehen, daß die Kühlflüssigkeit den Gehäusemantel 5 mäanderförmig durchläuft. Eine derartig wirkungsvolle Kühlung ist für den kompakt ausgebildeten, leistungsstarken Elektromotor 1 zum Antrieb von Kraftfahrzeugen erforderlich.

Zur Steuerung des als umrichtergespeisten Asynchronmotors ausgebildeten Elektromotors 1 ist eine Überwachungsanordnung aus einer Magnetfeldsensorensteuerung und einem auf der Motorwelle 11 befestigten Polrad 31 vorgesehen. Die Magnetfeldsensoren 33, 35, 37, 39 bestehen aus Hallsensoren und sind zusammen mit deren Anschlußfahnen auf einem Trägerteil 41 gehaltert, welches an dem Lagerschild 7 des Motorgehäuses 3 in axialer Richtung formschlüssig festgelegt ist. Das Lagerschild 7 weist eine zu dem Kugellager 21 für die Motorwelle 11 exzentrisch angeordnete Durchstecköffnung 42 für das die Magnetfeldsensoren 33, 35, 37, 39 tragende Ende 69 des Trägerteiles 41 auf. Das Polrad 41 enthält einen vierpolig magnetisierten Dauermagnetring 43, welcher zwischen den über die Stirnfläche 45 des Statorblechpaketes 47 hinausragenden Wickelköpfen 19, 20 der Statorwicklungen drehbar angeordnet ist. Das Polrad 41 ist hierbei zwischen den über die Stirnfläche 45 des Statorblechpaketes 47 hinausragenden Wickelköpfen 19, 20 der Statorwicklungen drehbar gelagert und weist einen auf seiner dem Lagerschild 7 zugewandten Stirnfläche 40 einen vielpolig magnetisierten Dauermagnetring 43 auf, dessen Pole 49 durch mehrere, konzentrisch zu der Motorwelle 11 und innerhalb des Motorgehäuses 3 auf dem Trägerteil 41 angeordnete Magnetfeldsensoren 33, 35, 37, 39 abtastbar sind. Der vielpolig magnetisierte Dauermagnetring 43 ist auf einer Trägerscheibe 123 befestigt, welche mit einer Lagernabe 125 auf einem Lagerbund 127 der Motorwelle 11 drehfest gelagert ist. Diese Trägerscheibe 123 weist an seiner äußeren Peripherie 129 einen umlaufenden Anschlagring 131 zur Zentrierung des Dauermagnetringes 43 auf. Die Befestigung des Dauermagnetringes 43 an seinem Außenumfang 133 erfolgt durch Haltewarzen 135, welche durch Verstemmen des Anschlagringes 131 an verschiedenen Punkten gebildet werden. Zusätzlich kann der Dauermagnetring 43 auf seiner inneren Berührungsfläche 137 mittels eines Klebers mit der Oberfläche 139 der Trägerscheibe 123 fest verbunden werden.

Da die Trägerscheibe 123 mit dem Dauermagnetring 43 in dem Zwischenraum 141 zwischen der Lagernabe 22 in dem Lagerschild 7 und dem Kurzschlußring 15 auf der Motorwelle 11 innerhalb der Wicklungsköpfe 19, 20 gelagert ist, ergibt sich ein kompakt ausgebildeter Asynchronmotor kurzer Baulänge.

Um zu verhindern, daß die von den Wickelköpfen 19, 20 der Statorwicklungen und/oder vom Rotor 13 ausgehenden magnetischen Streufelder störend auf die Magnetfeldsensoren 33, 35, 37, 39 auswirken, ist erfindungsgemäß eine magnetische Abschirmung vorgesehen. Diese magnetische Abschirmung besteht z. B. aus einem hochpermeablen Abschirmblechteil 51. Dieses Abschirmblechteil 51 ist z. B. aus Dynamoblech hergestellt. Das Abschirmblechteil 51 ist U-förmig ausgebildet und mittels in seinen Seitenschenkeln 53, 55 angeordneten Lagerbohrungen 57, 59 auf Arretierschrauben 61 verschwenkbar gelagert, welche in Gewindebohrungen 63 des Trägerteiles 41 für die Magnetfeldsensoren 33, 35, 37, 39 einschraubbar sind. Durch Lösen der Arretierschrauben 61 kann das Abschirmblechteil 51 optimal eingestellt werden, wonach danach durch Festziehen der Arretierschrauben 61 die Einstellage des Abschirmblechteiles 51 sicher gewährleistet wird.

Die Magnetfeldsensoren 33, 35, 37, 39 sind auf dem freien Ende 97 einer gedruckte Schaltungen aufweisenden Leiterplatte 65 angeordnet, auf welcher auch noch weitere elektronische Bauelemente angeordnet sind. Um die Magnetfeldsensoren 33, 35, 37, 39 zu den Polen des Dauermagnetringes 43 einstellen zu können, ist die Leiterplatte 65 auf dem Trägerteil 41 verschiebbar gelagert. Für diesen Zweck weist das Trägerteil 41 an seinem einen freien Ende 67 innerhalb des Motorgehäuses 3 Führungsnuten 70, 71 zur formschlüssigen Führung der Leiterplatte 65 vor den Polen 49 des Dauermagnetringes 43 auf. Hierbei dienen die Seitenkanten 93, 95 an dem Ende 97 an der Leiterplatte 65 als Führungskanten, welche in den Nuten 70, 71 gleiten. Andererseits ist die Leiterplatte 65 auf dem anderen Ende 73 des Trägerteiles 41 mit Langlöchern 75, 77 auf Arretierschrauben 79 verschiebbar gelagert, welche zum Arretieren der Leiterplatte 65 in Gewindebohrungen 81, 82 des Trägerteiles 41 fest einschraubbar sind. Die Langlöcher 75, 77 sind übrigens an dem Ende 99 der Leiterplatte 65 angeordnet. Durch Lösen der Arretierschrauben 79 kann einerseits die Leiterplatte 65 schnell und leicht auf dem Trägerteil 41 eingestellt oder auch durch eine neue Leiterplatte 65 ersetzt werden.

Zum Befestigen des Trägerteiles 41 an dem Lagerschild 7 in der Durchtrittsöffnung 42 ist das Trägerteil 41 mit einem senkrecht zu der Auflage- und Verschiebefläche 83 für die Leiterplatte 65 angeordneten Befestigungslappen 85 mit Durchgangsbohrungen 87, 89 versehen, durch welche Befestigungsschrauben 91 zum Einschrauben in Gewindebohrungen 92 in dem Lagerschild 7 durchsteckbar sind.

Da der erfindungsgemäße Elektromotor 1 in Kraftfahrzeugen eingesetzt wird, ist es erforderlich, daß die Bauelemente auf der Leiterplatte 65 vor Feuchtigkeit geschützt werden. Zu diesem Zweck ist eine Abdeckkappe 101 über das nach außen aus dem Lagerschild 7 des Motorgehäuses 3 herausragende Ende 71 des Trägerteiles 41 übergestülpt und mit dem Lagerschild 7 flüssigkeitsdicht verbunden. Diese Abdeckkappe 101 ist topf- oder wannenförmig ausgebildet und weist an ihrer Öffnungsseite einen umlaufenden Befestigungsflansch 103 mit Durchgangsbohrungen 105 für in Gewindebohrungen 109 des Lagerschildes 7 einschraubbare Befestigungsschrauben 107 auf. Zum Justieren der Leiterplatte 65 und/oder Ersetzen der Leiterplatte 65 ist die Abdeckkappe 101 mit wenigen Handgriffen entfernbar. Außerdem weist die Mantelfläche 113 der Abdeckkappe 101 ein durch Arretiermuttern 115, 117 axial gesichertes Zuführrohr 119 für die elektrischen Zuleitungen 121 zu der Leiterplatte 65 auf. Auch hierdurch wird ein Eindringen von Feuchtigkeit bzw. Flüssigkeiten in das Innere des Motorgehäuses 3 sicher verhindert. Zur Erhöhung der Dichtwirkung zwischen der Abdeckkappe 101 und dem Lagerschild 7 kann noch ein Dichtring 111 zwischen den Befestigungsflansch 103 der Abdekkappe 101 und dem Lagerschild 7 angeordnet werden.

Aufgrund des großen Durchmessers des Dauermagnetringes 43 ist es möglich, viele Pole auf diesem Dauermagnetring 43 unterzubringen. Erfindungsgemäß weist der Dauermagnetring 43 hundertzweiunddreißig Pole auf, welche durch vier konzentrisch zu der Motorwelle 11 auf der Leiterplatte 65 angeordnete Magnetfeldsensoren 33, 35, 37, 39 abgetastet werden. Hierdurch wird eine sichere Überwachung bzw. Steuerung des umrichtergespeisten Asynchronmotors für den Einsatz in Kraftfahrzeugen gewährleistet.

## Patentansprüche

1. Elektromotor, insbesondere umrichtergespeister Asynchronmotor zum Antrieb von Kraftfahrzeugen, mit einer aus einer Magnetfeldsensorensteuerung und einem auf der Motorwelle befestigten Polrad bestehenden Überwachungsanordnung, wobei die Magnetfeldsensoren und deren Anschlußfahnen an einem Trägerteil gehaltert sind, das an einem Lagerschild des Motorgehäuses in axialer Richtung formschlüssig festgelegt ist, und wobei das Lagerschild eine zu dem Lager für die Motorwelle exzentrisch angeordnete Durchstecköffnung für das die Magnetfeldsensoren tragende Ende des Trägerteiles aufweist, **dadurch gekennzeichnet,** daß das Polrad (41) zwischen den über die Stirnfläche (45) des Statorblechpaketes (7) hinausragenden Wickelköpfen (19, 20) der Statorwicklungen drehbar angeordnet ist und einen auf seiner dem Lagerschild (7) zugewandten Stirnfläche (40) einen vielpolig magnetisierten Dauermagnetring (43) aufweist, dessen Pole (49) durch mehrere, konzentrisch zu der Motorwelle (11) und innerhalb des Motorgehäuses (3) auf dem Trägerteil (41) angeordnete Magnetfeldsensoren (33, 35, 37, 39) abtastbar sind.

2. Elektromotor nach Anspruch 1, **gekennzeichnet durch** eine magnetische Abschirmung der Magnetfeldsensoren (33, 35, 37, 39) gegen magnetische Streufelder, welche von den Wickelköpfen (20, 24) der Statorwicklungen und/oder vom Rotor (13) ausgehen.

3. Elektromotor nach Anspruch 2, **dadurch gekennzeichnet,** daß die magnetische Abschirmung aus einem hochpermeablen Abschirmblech (51) besteht.

4. Elektromotor nach Anspruch 3, **dadurch gekennzeichnet,** daß das Abschirmblech (51) aus Dynamoblech besteht.

5. Elektromotor nach Anspruch 3 oder 4, **dadurch gekennzeichnet,** daß das Abschirmblechteil (51) Ü-förmig ausgebildet und mittels in seinen Seitenschenkeln (53, 55) angeordneten Lagerbohrungen (57, 59) auf Arretierschrauben (61) verschwenkbar gelagert ist, welche in Gewindebohrungen (63) des Trägerteiles (41) für die Magnetfeldsensoren (33, 35, 37, 39) einschraubbar sind.

6. Elektromotor nach einem der vorhergehenden Ansprüche, **dadurch gekennzeichnet,** daß das Trägerteil (41) aus einem U-förmigen Blechteil besteht, auf dem eine gedruckte Schaltungen aufweisende Leiterplatte (65) mit einzelnen Bauelementen wie Magnetfeldsensoren, Thermoschalter, Widerstände usw. verschieb- und arretierbar gelagert ist.

7. Elektromotor nach Anspruch 6, **dadurch gekennzeich-net,** daß eine Abdeckkappe (101) über das nach außen aus dem Lagerschild (7) des Motorgehäuses (3) herausragende Ende (71) des Trägerteiles (41) übergestülpt und mit dem Lagerschild (7) flüssigkeitsdichtend fest verbunden ist.

8. Elektromotor nach Anspruch 7, **dadurch gekennzeichnet,** daß die Abdeckkappe (101) topf- oder wannenförmig ausgebildet ist und an ihrer Öffnungenseite einen umlaufenden Befestigungsflansch (103) mit Durchgangsbohrungen (105) für in Gewindebohrungen (109) des Lagerschildes (7) einschraubbare Befestigungsschrauben (107) aufweist.

9. Elektromotor nach Anspruch 7 oder 8, **dadurch gekennzeichnet,** daß ein Dichtungsring (111) zwischen dem Befestigungsflansch (103) der Abdeckkappe (101) und dem Lagerschild (7) angeordnet ist.

10. Elektromotor nach Anspruch 7, 8 oder 9, **dadurch gekennzeichnet,** daß die Mantelfläche (113) der Abdeckkappe (101) ein durch Arretiermuttern (115, 117) gesichertes Zuführrohr (119) für die elektrischen Zuleitungen (121) zu der Leiterplatte (65) aufweist.

11. Elektromotor nach einem der vorhergehenden Ansprüche, **dadurch gekennzeichnet,** daß der vielpolig magnetisierte Dauermagnetring (43) auf einer Trägerscheibe (123) befestigt ist, welche mit einer Lagernabe (125) auf einem Lagerbund (127) der Motorwelle (11) drehfest gelagert ist und an seiner äußeren Peripherie (129) einen umlaufenden Anschlagring (131) zur Zentrierung des Dauermagnetringes (43) aufweist.

12. Elektromotor nach Anspruch 11, **dadurch gekennzeichnet,** daß der Dauermagnetring an seinem Außenumfang (133) durch Verstemmen des Anschlagringes (131) gebildete Haltewarzen (135) an der Trägerscheibe (123) festgehalten wird.

13. Elektromotor nach Anspruch 11 oder 12, **dadurch gekennzeichnet,** daß der Dauermagnetring (43) auf seiner inneren Berührungsfläche (137) mittels eines Klebers mit der Oberfläche (139) der Trägerscheibe (123) fest verbunden ist.

14. Elektromotor nach einem der vorhergehenden Ansprüche, **dadurch gekennzeichnet,** daß der Dauermagnetring (43) hundertzweiunddreißig Pole aufweist und daß die Leiterplatte (65) mit vier konzentrisch zu der Motorwelle (11) angeordnete Magnetfeldsensoren (33, 35, 37, 39) versehen ist.

15. Elektromotor nach einem der vorhergehenden Ansprüche, **dadurch gekennzeichnet,** daß die Magnetfeldsensoren (33, 35, 37, 39) aus Hallsensoren bestehen.

16. Elektromotor nach einem der vorhergehenden Ansprüche, **dadurch gekennzeichnet,** daß die Trägerscheibe (123) mit dem Dauermagnetring (43) in dem Zwischenraum (141) zwischen der Lagernabe (22) in dem Lagerschild (7) und dem Kurzschlußring (15) auf der Motorwelle (11) gelagert ist.

17. Elektromotor nach einem der vorhergehenden Ansprüche, **dadurch gekennzeichnet,** daß das Trägerteil (41) an seinem einen freien Ende (67) innerhalb des Motorgehäuses (3) Führungsnuten (70, 71) zur formschlüssigen Führung der Leiterplatte (65) vor den Polen (49) des Dauermagnetringes (43) aufweist und daß die Leiterplatte (65) auf dem anderen Ende (73) des Trägerteiles (41) mit Langlöchern (75, 77) auf Arretierschrauben (79) verschiebbar gelagert ist, welche zum Arretieren der Leiterplatte (65) in Gewindebohrungen (81, 82) des Trägerteiles (41) fest einschraubbar sind.

18. Elektromotor nach Anspruch 17, **dadurch gekennzeichnet,** daß das Trägerteil (41) einen senkrecht zu der Auflage- und Verschiebefläche (83) für die Leiterplatte (65) angeordneten Befestigungslappen (85) mit Durchgangsbohrungen (87, 89) für in das Lagerschild (7) einschraubbare Befestigungsschrauben (91) aufweist.
